Europäisches Patentamt

European Patent Office

Office européen des brevets

(11) Publication number : **0 412 764 B1**

# EUROPEAN PATENT SPECIFICATION

(45) Date of publication of patent specification :
**12.10.94 Bulletin 94/41**

(51) Int. CI.⁵ : **H02H 7/04, H02H 7/00**

(21) Application number : **90308660.1**

(22) Date of filing : **07.08.90**

(54) **Supervisory system for superconductive transformer.**

(30) Priority : **11.08.89 JP 208810/89**

(43) Date of publication of application :
**13.02.91 Bulletin 91/07**

(45) Publication of the grant of the patent :
**12.10.94 Bulletin 94/41**

(84) Designated Contracting States :
**FR**

(56) References cited :
**EP-A- 0 205 924**
**PATENT ABSTRACTS OF JAPAN vol. 13, no.**
**321 (E-790)(3669)20 July 1989 & JP-A-1 089 412**
**( HITACHI ) 3 April 1989**

(73) Proprietor : **Kabushiki Kaisha Toshiba**
**72, Horikawa-cho**
**Saiwai-ku**
**Kawasaki-shi (JP)**

(72) Inventor : **Tashiro, Ikuo, c/o Intellectual**
**Property Div.**
**Kabushiki Kaisha Toshiba,**
**1-1 Shibaura 1-chome**
**Minato-ku, Tokyo 105 (JP)**
Inventor : **Ito, Daisuke, c/o Intellectual**
**Property Division**
**1-1 Shibaura 1-chome**
**Minato-ku, Tokyo 105 (JP)**
Inventor : **Morohoshi, Mituyoshi, Intellectual**
**Property Div**
**Toshiba,**
**1-1 Shibaura 1-chome**
**Minato-ku, Tokyo 105 (JP)**

(74) Representative : **Freed, Arthur Woolf et al**
**MARKS & CLERK,**
**57-60 Lincoln's Inn Fields**
**London WC2A 3LS (GB)**

## Description

The present invention relates to a supervisory system for a superconductive transformer and, more particularly, to a supervisory system which can detect quench of a plurality of windings constituted by superconductive lines in a short response time.

In recent years, various superconductive lines with less AC loss have been developed. By constituting primary, secondary, ..., Nth-order windings using such superconductive lines, attempts have been made to make a transformer compact and to reduce a copper loss.

In a so-called "superconductive transformer" in which primary, secondary, ..., Nth-order windings are constituted by superconductive lines, when a current exceeding a critical current flows through the superconductive lines constituting the windings due to short-circuiting during an operation of the transformer, the corresponding windings are quenched. Once the quench occurs, the resistances of the windings are increased. For this reason, the superconductive transformer loses a function of an AC power transformer. Therefore, when the quench locally occurs, the superconductive transformer must be disconnected from a power source as soon as possible to prevent the quench of the remaining portion, and it must be waited until the quenched portion is recovered to a superconductive state. In order to perform such control, whether or not superconductive lines constituting the windings are quenched must be detected by any section.

As a method of detecting a quenched winding which is formed of the superconductive line and is used in an AC excitation state, a method of detecting the quench based on a phase relationship between a terminal voltage of the winding and a current flowing through the winding is known. This method utilizes the following phenomenon. That is, when the winding is excited with an AC voltage and when the winding is in a superconductive state, a phase difference of $\pi/2$ is accurately present between the voltage and the current. However, when the winding is quenched, the phase difference between the voltage and the current is decreased below $\pi/2$.

However, this method cannot be applied when a superconductive transformer is used. More specifically, in the superconductive transformer, a phase difference between a voltage and a current changes depending on types of load. When a load consists of only resistive components, there is no phase difference (= 0); when a load consists of inductive components, the phase difference is approximate to $\pi/2$. For this reason, a phase difference caused by the quench cannot be discriminated. For these reasons, demand has arisen for a supervisory system which can detect quenched windings of the superconductive transformer in a short response time.

As described above, the conventional section cannot detect quenched windings of the superconductive transformer in principle.

It is an object of the present invention to provide a supervisory system of a superconductive transformer which can detect quench while discriminating a quenched winding, and can disconnect the superconductive transformer from a power source as soon as possible.

The invention provides a supervisory system according to Claim 1 for a transformer with a secondary winding, and a supervisory system according to Claim 4 for a transformer with up to Nth order windings (N is 3 or more).

This invention can be more fully understood from the following detailed description when taken in conjunction with the accompanying drawings, in which:

Fig. 1 is a circuit diagram of a supervisory system for a superconductive transformer according to an embodiment of the present invention;

Figs. 2 and 3 are circuit diagrams of supervisory systems for a superconductive transformer according to other embodiments of the present invention; and

Fig. 4 is an equivalent circuit diagram of the superconductive transformer.

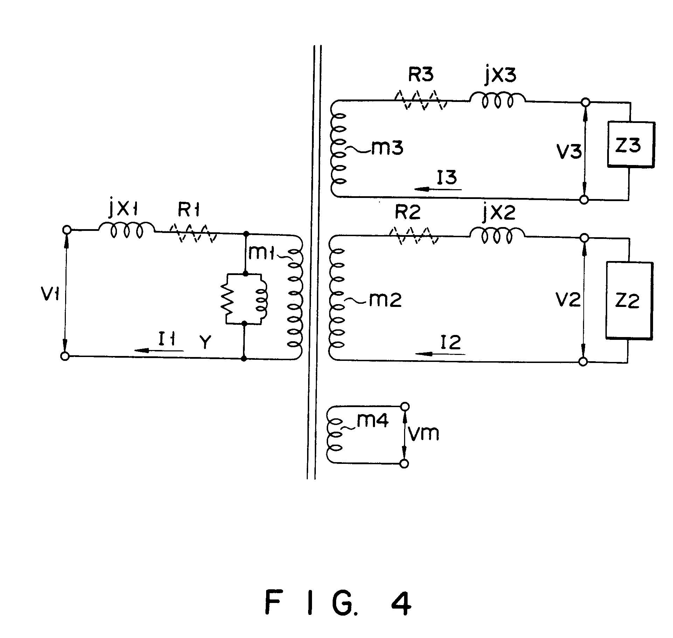

For the sake of simplicity, a superconductive transformer comprising up to a tertiary winding will be exemplified below. Fig. 4 shows an equivalent circuit of the superconductive transformer comprising up to the tertiary winding.

In Fig. 4, reference symbol m1 denotes a primary winding; m2, a secondary winding; m3, a tertiary winding; and m4, a winding serving as the above-mentioned magnetic flux detection section. Symbols in Fig. 4 are defined as follows:

V1 :       Primary winding voltage
V2 :       Secondary winding voltage
V3 :       Tertiary winding voltage
Vm :      Magnetic flux detection winding voltage
R1 :       Primary winding resistance
R2 :       Secondary winding resistance

R3 :      Tertiary winding resistance
I1 :      Primary winding current
I2 :      Secondary winding current
I3 :      Tertiary winding current
jX1:     Primary winding reactance
jX2:     Secondary winding reactance
jX3:     Tertiary winding reactance
Y :      Excitation admittance

In this transformer, impedance leakage components (R1+jX1, R2+jX2, R3+jX3) of the primary, secondary, and tertiary windings will never be changed.

In the transformer using superconductive lines as windings, when the primary winding is quenched, for example, the resistance R1 of the primary winding is increased to several hundreds of times than in a steady state. In this case, the secondary winding voltage V2, the tertiary winding voltage V3, and the magnetic flux detection winding voltage Vm are considerably decreased. In addition, the primary, secondary, and tertiary winding currents I1, I2, and I3 are also considerably decreased.

When the secondary winding is quenched, the resistance of the secondary winding R2 is increased to several hundreds of times that in a steady state. Therefore, the secondary winding voltage V2 and the secondary winding current I2 are decreased. However, the primary winding voltage V1 and the magnetic flux detection winding voltage Vm are not decreased.

Furthermore, when the tertiary winding is quenched, the resistance R3 of the tertiary winding is increased to several hundreds of times that in a steady state. However, the primary winding voltage V1 and the magnetic flux detection winding voltage Vm are left unchanged.

Table 1 below summarizes these phenomena. Note that a mark → represents that a value is unchanged before and after quench occurs, and a mark ↓ represents that the value is decreased.

## Table 1

|  | Primary Winding Quench | Secondary Winding Quench | Tertiary Winding Quench | · · · · | Nth-order Winding Quench |
|---|---|---|---|---|---|
| V1 | → | → | → | · · · · | → |
| V2 | ↓ | ↓ | → | · · · · | → |
| V3 | ↓ | → | ↓ | · · · · | → |
| ⋮ | ⋮ | ⋮ | ⋮ | · · · · | ⋮ |
| Vn | ↓ | → | → | · · · · | ↓ |
| Vm | ↓ | → | → | · · · · | → |
| I1 | ↓ | ↓ | ↓ | · · · · | ↓ |
| I2 | ↓ | ↓ | → | · · · · | → |
| I3 | ↓ | → | ↓ | · · · · | → |
| ⋮ | ⋮ | ⋮ | ⋮ | · · · · | ⋮ |
| In | ↓ | → | → | · · · · | ↓ |

As can be seen from Table 1, change patterns of V1, V2, V3, Vm, I1, I2, and I3 when the primary, secondary, and tertiary windings are quenched are different from each other. More specifically, when a certain winding is quenched, V1, V2, V3, Vm, I1, I2, and I3 are changed in patterns unique to the winding.

In the system of the present example V1, V2, V3, Vm, I1, I2, and I3 are detected, and their feature change patterns are recognized by a discrimination section based on these voltages and currents, thus specifying a quenched winding. When a given winding is quenched, the superconductive transformer is disconnected from a power source as soon as possible.

In another embodiment of the present invention, a voltage drop Vr1 caused by the primary winding resistance R1, a voltage drop Vr2 caused by the secondary winding resistance R2, and a voltage drop Vr3 caused by the tertiary winding resistance R3 are calculated by the discrimination section using the following equations on the basis of V1, V2, V3, Vm, I1, I2, and I3, and jX1, jX2, and jX3 which are discriminated in advance. When this voltage drop Vr1, Vr2, or Vr3 falls outside a predetermined range, it is determined that quench occurs in the corresponding winding.

$$Vr1 = I1 \cdot R1 = V1 - Vm - jX1 \cdot I1 \quad (1)$$
$$Vr2 = I2 \cdot R2 = Vm - V2 - jX2 \cdot I2 \quad (2)$$
$$Vr3 = I3 \cdot R3 = Vm - V3 - jX3 \cdot I3 \quad (3)$$

Vm in equation (1) imitates a primary winding induced voltage, Vm in equation (2) imitates a secondary winding induced voltage, and Vm in equation (3) imitates a tertiary winding induced voltage. Vr1, Vr2, and Vr3 are calculated in consideration of a ratio of the number of turns of windings, and vectors in practice. In this case, the vectors are not taken into consideration, and voltage drops are calculated based on simple equations (1) to (3). With this calculation method, when a given winding is quenched, a voltage drop caused by the resistance of the corresponding winding is increased, and the quenched winding can be immediately detected.

<First Embodiment>

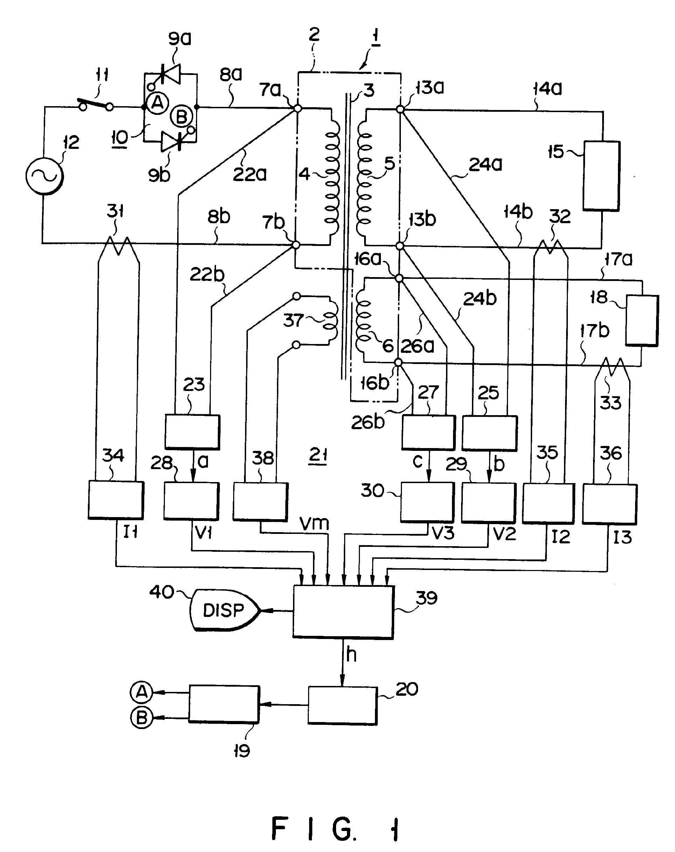

The structural relationship between a quench supervisory system 21 and a superconductive transformer 1 according to the first embodiment of the present invention shown in the circuit diagram of Fig. 1 is as follows.

The superconductive transformer 1 comprises a core 3 which is arranged in a cryostat 2 storing a cryogenic coolant to be thermally insulated from the coolant, a primary winding 4 formed of a superconductive line dipped in the coolant and wound around the outer surface of the core 3, a secondary winding 5 formed of a superconductive line dipped in the coolant and wound around the outer surface of the core 3, and a tertiary winding 6 formed of a superconductive line dipped in the coolant and wound around the outer surface of the core 3.

Two ends 7a and 7b of the primary winding 4 are connected to one-end portions of lead lines 8a and 8b formed of normal conductive lines. The other-end portions of these lead lines 8a and 8b extend outside the cryostat 2, and are connected to output terminals of an AC power source 12 through a semiconductor switch 10 constituted by inverse-parallel connecting thyristors 9a and 9b, and a mechanical switch 11.

Two ends 13a and 13b of the secondary winding 5 are also connected to one-end portions of lead lines 14a and 14b formed of normal conductive lines. The other-end portions of the lead lines 14a and 14b extend outside the cryostat 2 and are connected to the two terminals of a load 15.

Similarly, two ends 16a and 16b of the tertiary winding 6 are connected to one-end portions of lead lines 17a and 17b formed of normal conductive lines. The other-end portions of these lead lines 17a and 17b extend outside the cryostat 2, and are connected to two terminals of a load 18.

The thyristors 9a and 9b constituting the semiconductor switch 10 are firing-controlled by a gate control circuit 19, so that they can supply an AC current to the superconductive transformer 1 as a load. The gate control circuit 19 is driven by a gate drive circuit 20. When the gate drive circuit 20 receives a signal $\underline{h}$ at its control terminal, its operation is stopped. The signal $\underline{h}$ is supplied from the supervisory system 21 to be described below.

The supervisory system 21 is arranged as follows. More specifically, the supervisory system 21 comprises a voltage divider 23 connected to the other-end portions of signal lines 22a and 22b whose one-end portions are connected to the two ends 7a and 7b of the primary winding 4, and a voltage divider 25 connected to the other-end portions of signal lines 24a and 24b whose one-end portions are connected to the two ends 13a and 13b of the secondary windings 5. The system 21 also comprises a voltage divider 27 connected to the other-end portions of signal lines 26a and 26b whose one-end portions are connected to the two ends 16a and 16b of the tertiary winding 6.

The voltage divider 23 outputs a voltage 1/n (n=2)the terminal voltage of the primary winding 4. If a ratio of the numbers of turns of the primary and secondary windings 4 and 5 is assumed to be 1 : S, the voltage divider 23 outputs a voltage 1/(n·S) the terminal voltage of the secondary winding 5. If a ratio of the numbers of turns of the primary and tertiary windings 4 and 6 is assumed to be 1 : S', the voltage divider 27 outputs a voltage 1/(n·S') the terminal voltage of the tertiary winding 6. Output voltages $\underline{a}$, $\underline{b}$, and $\underline{c}$ of the voltage dividers 23, 25, and 27 are converted into signals V1, V2, and V3 via insulated amplifiers 28, 29, and 30.

Current sensors 31, 32, and 33 are inserted in the input line of the primary winding 4, the output line of the secondary winding 5, and the output line of the tertiary winding 6. The outputs of these current sensors 31, 32, and 33 are converted into signals I1, I2, and I3 via insulated amplifiers 34, 35, and 36.

A winding for obtaining a voltage for imitating induced voltages of the windings, i.e., a magnetic flux detection winding 37 is wound around the core 3 of the superconductive transformer 1. The output from the magnetic flux detection winding 37 is converted into a signal vm via an insulated amplifier 38. The signals Vm, V1, V2, V3, I1, I2, and I3 are supplied to a CPU 39.

Upon reception of the seven signals, the CPU 39 calculates the voltage drops Vr1, Vr2, and Vr3 caused by the resistances of the primary, secondary, and tertiary windings 4, 5, and 6, respectively using the above-mentioned equations (1), (2), and (3). When the voltage drop Vr1, Vr2, or Vr3 falls outside a predetermined range, the CPU 39 determines quench, and sends the output $\underline{h}$. The CPU 39 also outputs a signal for causing

4

a display unit 40 to display a name of a quenched winding.

<First Function>

With this arrangement, when the primary winding 4 is quenched, for example, Vm and I1 are decreased, as can be seen from Table 1, and, hence, Vr1 is increased. When Vr1 is increased beyond the predetermined range, the CPU 39 determines that the primary winding 4 is quenched, sends the output h, and outputs a display signal for displaying that the primary winding 4 is quenched. As a result, the operation of the gate drive circuit 20 is stopped, and the thyristors 9a and 9b are turned off, thus disconnecting the superconductive transformer 1 from the AC power source 12. The display unit 40 displays a message indicating that the primary winding 4 is quenched.

When the secondary or tertiary winding 5 or 6 is quenched, the superconductive transformer 1 is similarly disconnected from the AC power source 12, and a name of the quenched winding is displayed on the display unit 40. Therefore, the quench occurring in each winding can be detected in a short response time, and the superconductive transformer 1 can be disconnected from the AC power source 12 as soon as possible.

In the first embodiment, voltage drops due to the resistances of the windings are detected, and when the voltage drop falls outside the predetermined range, quench is determined. Therefore, quench detection can be satisfactorily performed regardless of types of loads connected to the transformer. Not only quench detection but also measurement of energy loss caused by quench can also be performed.

As has been described above with reference to Table 1, when a winding is quenched, V1, V2, V3, Vm. I1, I2, and I3 are changed in patterns unique to the quenched winding. Therefore, a function of only discriminating occurrence of quench and detecting a quenched winding based on the above-mentioned changes in patterns may be provided. The first embodiment can be further expanded, and may be applied to a superconductive transformer comprising primary, secondary, tertiary, ..., Nth-order (N is an integer not less than 3) windings.

Since the terminal voltage of the primary winding is left unchanged regardless of quench and need not be detected, a detection means for it may be omitted to attain a simple arrangement.

<First Effect>

The system of the first embodiment can detect the number of quenched windings.

Even when changes in linkage inductances of windings occur, the voltages and currents of the primary and tertiary windings which vary depending on types of load in the circuit are calculated by equations which are free from the influence on quench detection results caused by such changes. Therefore, precise quench detection can be performed.

<Second Embodiment>

The present invention is not limited to the number of windings. When the present invention is applied to a so-called primary superconductive transformer comprising only two windings, i.e., primary and secondary windings, another effect can be expected.

<Second Function>

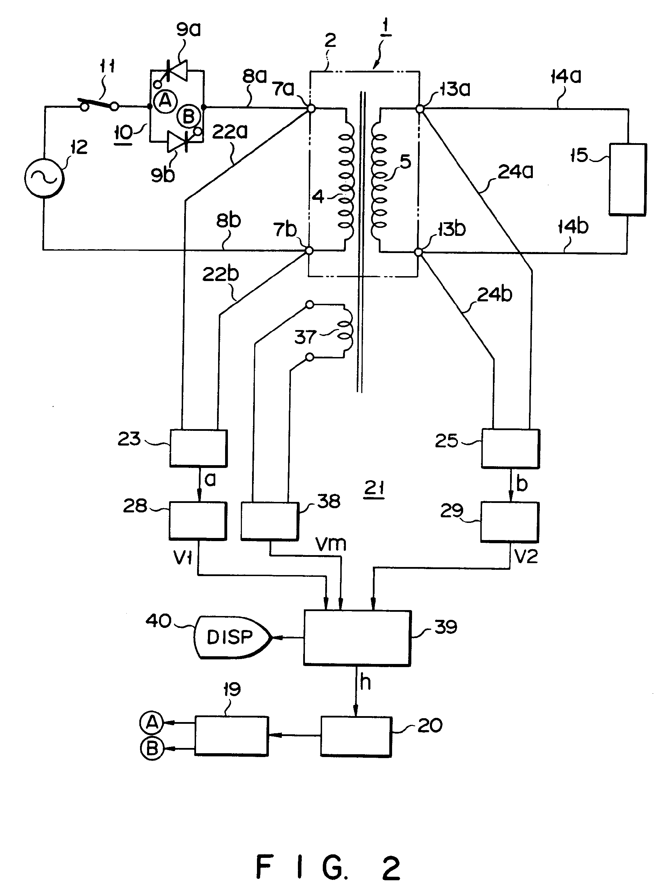

As shown in Fig. 2, a supervisory system 21 according to the second embodiment mainly comprises signal lines 22a and 22b, and signal lines 24a and 24b which are connected to the two ends 7a and 7b and the two ends 13a and 13b of the primary and secondary windings 4 and 5 constituting the superconductive transformer 1, a voltage divider 23 and an insulated amplifier 28 connected to the signal lines 22a and 22b, a voltage divider 25 and an insulated amplifier 29 connected to the signal lines 24a and 24b, a magnetic flux detection winding 37 wound around the core 3, an insulated amplifier 38 connected to the two ends of the winding 37, a CPU 39 for receiving and processing voltage signals V1, V2, and Vm from the insulated amplifiers 28, 29, and 38, a display unit 40 connected to the CPU 39, a gate drive circuit 20 and a gate control circuit 19 which are operated in accordance with a disconnection instruction signal h from the CPU 39, and thyristors 9a and 9b for opening/closing the circuit based on a control signal from the control circuit 19. That is, when the superconductive transformer 1 comprises the primary and secondary windings, insulated amplifiers 34, 35, and 36 associated with current signals of the windings, and the insulated amplifier 30 associated with the voltage signal V3 of the tertiary winding 6 can be omitted from the main constituting elements of the first embodiment shown in Fig. 1. If only a quenched winding is to be detected, change patterns of voltage signals V1 and V2 in the windings when quench occurs need only be observed, and current signals I1, I2, I3, ..., In are not taken into consideration.

Furthermore, as can be seen from Table 2 below, only the voltage signal Vm is supervised, and when Vm is decreased, quench in the primary winding can be detected. Only the voltage signal V2 is supervised (that is, Vm is left unchanged), and when V2 is decreased, quench in the secondary winding can be detected.

In this manner, the voltage signal V1 is unnecessary for detecting quench in the primary and secondary windings, and need not be detected.

The constituting elements of the second embodiment are operated in the same manner as in the first embodiment, and a detailed description thereof will be omitted.

Table 2 below shows changes in voltage signals V1, V2, and Vm of the primary and secondary windings 4 and 5, and the magnetic flux detection winding 37.

## Table 2

|  | Primary Winding Quench | Secondary Winding Quench |
|---|---|---|
| V1 V2 | → ↓ | → ↓ |
| Vm | ↓ | → |

<Second Effect>

The supervisory system 21 of this embodiment can be realized by an arrangement simpler than that of the first embodiment. When change patterns are detected, as shown in Table 2, the superconductive transformer 1 can be quickly disconnected from a power source 12 as needed.

<Third Embodiment>

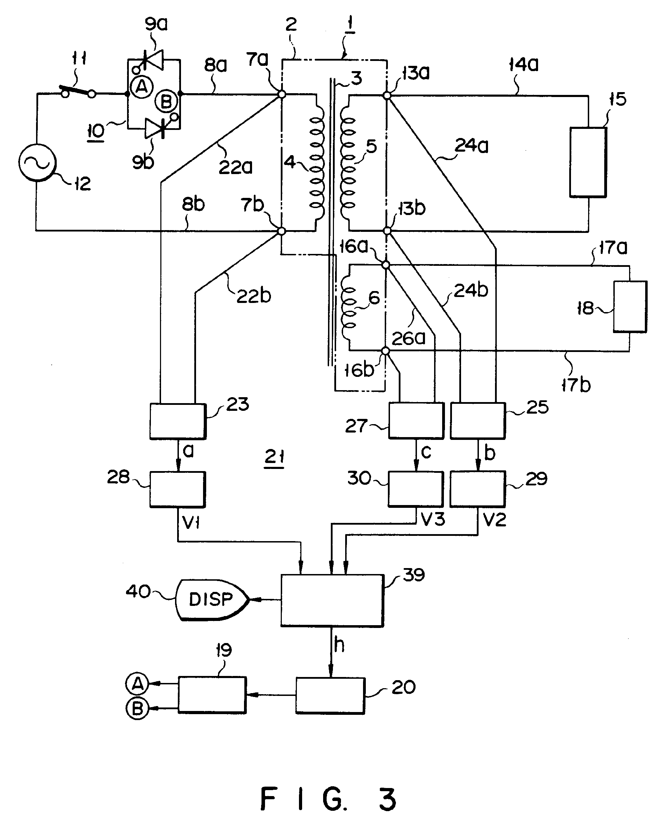

As shown in Fig. 3, in a quench supervisory system 21 according to the third embodiment, when a superconductive transformer comprises primary to Nth-order windings, the insulated amplifiers 34, 35, and 36 associated with the current signals I1, I2, I3, ..., In of the windings, the magnetic flux detection winding 37, and the insulated amplifier 38 may be omitted from the main constituting elements of the first embodiment shown in Fig. 1. If only a quenched winding is to be detected, change patterns of voltage signals V1, V2, V3, ..., Vn in the windings during occurrence of quench need only be observed, and current signals I1, I2, I3,..., In are not taken into consideration. Furthermore, the voltage signal V1 need not be observed as in the above embodiment. In this embodiment, however, this signal is not omitted.

<Third Function>

Changes in voltages indicated by voltage signals V1, V2, V3, ..., Vn input to a CPU 39 via N voltage dividers 23, 25, 27, ..., corresponding to primary to Nth-order windings and insulated amplifiers 28, 29, 30, ... are detected by the CPU 39. Once change patterns shown in Table 3 below appear, a message indicating that quench occurs is displayed on a display unit 40 connected to the CPU 39. A gate drive circuit 20 operated according to a disconnection instruction signal h from the CPU 39 and thyristors 9a and 9b operated according to a gate control circuit 19 disconnect, from a circuit, a power source 12 for supplying an electrical power to a superconductive transformer 1.

## Table 3

| | Primary Winding Quench | Secondary Winding Quench | Tertiary Winding Quench | · · · · | Nth-order Winding Quench |
|---|---|---|---|---|---|
| V1 | → | → | → | · · · · | → |
| V2 | ↓ | ↓ | → | · · · · | → |
| V3 | ↓ | → | ↓ | · · · · | → |
| : | : | : | : | · · · · | : |
| Vn | ↓ | → | → | · · · · | ↓ |

<Third Effect>

The quench supervisory system 21 according to the third embodiment can detect a quenched winding with a simple arrangement. When change patterns shown in Table 3 are detected, the power source 12 of the superconductive transformer 1 can be quickly disconnected from the circuit, as needed.

<Modification>

In each of the above embodiments, the voltage dividers 23, 25, and 27, and the insulated amplifiers 28, 29, and 30 are separately arranged, but may be integrally arranged as voltage transformers. Various changes and modifications may be made within the scope of the invention.

As described above, the quench supervisory system of the present invention can very easily detect a quenched winding in a short response time even in a superconductive transformer comprising a large number of windings. Therefore, a supervisory system which can take an appropriate countermeasure against a quenched winding can be provided.

## Claims

1. A supervisory system (21), which is used for a superconductive transformer (1) which comprises a primary winding (4) and a secondary winding (5), and in which said primary and secondary windings are formed of superconductive lines and are wound around an outer surface of a single core (3), said system detecting a quench occurring in the windings, comprising:

   voltage detection means (25) for detecting a terminal voltage (V2) of said secondary winding;

   magnetic flux detection means (37, 38), mounted on said core, for detecting the magnitude of magnetic flux generated in said core to produce an output voltage (Vm) representative of its magnitude; and

   discrimination means (39) for determining whether there has been a change in the said terminal voltage (V2) and in the said output voltage (Vm) and for identifying which of the windings has quenched on the basis of the specific pattern of the results of that determination on the basis of the specific combination of changes in those voltages (V2, Vm).

2. A system according to Claim 1, characterized in that said discrimination means (39) identifies the primary winding as having quenched when the output voltage (Vm) of said magnetic flux detection means has changed, and identifies a secondary winding quench when only the terminal voltage (V2) of said voltage detection means has changed.

3. A system according to Claim 1, characterized by further comprising:

   power source disconnection means (10) for disconnecting said superconductive transformer (1) from a power source (12) in response to an instruction signal output (h) output when said discrimination means (39) discriminates that quench occurs; and

   display means (40) for displaying information associated with occurrence of quench.

4. A supervisory system (21), which is used for a superconductive transformer (1) which comprises primary to Nth-order windings (4, 5, 6), N being an integer of not less than 3, and in which the windings are formed of superconductive lines and are wound around an outer surface of a single core (3), said system detecting quench occurring in the windings, comprising:

voltage detection means (25, 27) for detecting terminal voltages (V2, V3, ..., Vn) of the secondary to Nth order windings; and determining for each terminal voltage whether there has been a change therein, and identifying which winding has quenched, on the basis of the specific pattern of the results of that determination.

5. A system according to Claim 4 characterized in that said discrimination means (39) identifies a primary winding quench when all the terminal voltages (V2 to Vn) of the secondary to Nth-order windings from said voltage detection means have changed, identifies a secondary winding quench when only the terminal voltage of said secondary winding from said voltage detection means has changed, and identifies Nth-order winding quench when only the terminal voltage (Vn) of the Nth-order winding from said voltage detection means has changed.

6. A system according to Claim 4 or 5, characterized by further comprising:

voltage detection means (23) for detecting a terminal voltage (V1) of said primary winding;

current detection means (31, 32, 33) for respectively detecting changes in currents (I1, I2, ..., In) flowing through said primary to Nth-order windings (4, 5, 6);

magnetic flux detection means (37, 38) mounted on said core (3); and

power source disconnection means (10) for disconnecting said superconductive transformer (1) from a power source (12) in response to an instruction signal output (h) output when said discrimination means (39) discriminates that quench occurs.

7. A system according to Claim 6, characterized in that said discrimination means (39) also determines whether there has been any change in each of the terminal voltage (V1) of the primary winding, the said winding currents (I1, ..., In) and an output signal (Vm) of the magnetic flux detection means; and identifies which one of said windings has quenched on the basis of the specific pattern of the results of the said determinations.

8. A system according to Claim 6, characterized in that said discrimination means (39) receives an output signal from said magnetic flux detection means (37, 38), output signals from said voltage detection means (23, 25, 27), and output signals from said current detection means (31, 32, 33), calculates voltage drops caused by resistance of the corresponding windings, and identifies which one of said windings has quenched on the basis of the levels of the calculated voltage drops.

9. A system according to Claim 8, characterized in that said discrimination means (39) calculates the voltage drops Vr1, Vr2, and Vr3 generated in said primary to tertiary windings using the following calculations:

$$Vr1 = I1.R1 = V1 - Vm - jX1.I1$$
$$Vr2 = I2.R2 = Vm - V2 - jX2.I2$$
$$Vr3 = I3.R3 = Vm - V3 - jX3.I3$$

where Rn: a resistance for an nth-order winding, In: an nth-order winding current, Vn: an nth-order winding voltage, Vm: the output signal voltage of the magnetic flux detection means (37, 38), which corresponds to the induced voltage in the respective winding (n=1, 2 or 3) for the respective equation, and jXn: a reactance of an nth-order winding for n = 1 to 3, and, when Vr1, Vr2, and Vr3 calculated by the equations indicate values falling outside a predetermined range, said discrimation means (39) discriminates that the windings are quenched.

10. A system according to Claim 6, 7, 8 or 9, characterized in that said discrimination means (39) comprises a RAM, connected to said voltage detection means, said current detection means, and said magnetic flux detection means, for storing output signals output from said voltage detection means, said current detection means, and said magnetic flux detection means.

11. A system according to Claim 6, 7, 8 or 9, characterized in that said discrimination means (39) comprises a register, connected to said voltage detection means, said current detection means, and said magnetic flux detection means, for storing output signals output from said voltage detection means, said current detection means, and said magnetic flux detection means as a predetermined number of pieces of binary information (binary number 1/0).

12. A system according to Claim 6, characterized in that said power source disconnection means (10) comprises a plurality of thyristors (9a, 9b), connected between said primary winding (4) of said superconductive transformer (1) and a power source (12) in parallel with each other and in opposing directions, for, when a signal (h) is issued from said discrimination means (39), electrically disconnecting the circuit.

13. A system according to any of Claims 4 to 12, characterized in that said voltage detection means (23, 25, 27) comprises digital voltmeters, connected to said windings, for detecting terminal voltages of said windings.

**Patentansprüche**

1. Überwachungssystem (21), das für einen supraleitenden Transformator (1) verwendet wird, der eine Primärwicklung (4) und eine Sekundärwicklung (5) umfaßt und bei dem die Primär- und die Sekundärwicklung aus supraleitenden Leitungen ausgebildet und um eine Außenfläche eines einzigen Kernes (3) gewickelt sind, wobei das System eine Löschung erkennt, die in den Wicklungen auftritt, mit:

einer Spannungsermittlungseinrichtung (25) zum Ermitteln einer Klemmenspannung (V2) der Sekundärwicklung;

einer Magnetflußermittlungseinrichtung (37, 38), die auf dem Kern angeordnet ist, zum Ermitteln der Größe des Magnetflusses, der in dem Kern erzeugt wird, um eine Ausgangsspannung (Vm) zu erzeugen, die diese Größe darstellt; und

einer Unterscheidungseinrichtung (39) zum Bestimmen, ob eine Änderung der Klemmenspannung (V2) und der Ausgangsspannung (Vm) vorhanden gewesen ist, und zum Erkennen, in welcher der Wicklungen eine Löschung aufgetreten ist, und zwar auf der Grundlage des spezifischen Musters der Ergebnisse jener Bestimmung auf der Grundlage der spezifischen Kombination von Änderungen jener Spannungen (V2, Vm).

2. System nach Anspruch 1, dadurch gekennzeichnet, daß die Unterscheidungseinrichtung (39) die Primärwicklung als eine erkennt, in der eine Löschung aufgetreten ist, wenn die Ausgangsspannung (Vm) der Magnetflußermittlungseinrichtung sich verändert hat, und die eine Sekundärwicklungslöschung erkennt, wenn sich lediglich die Klemmenspannung (V2) der Spannungsermittlungseinrichtung verändert hat.

3. System nach Anspruch 1, dadurch gekennzeichnet, daß es ferner aufweist:

eine Stromquellentrenneinrichtung (10) zum Trennen des supraleitenden Transformators (1) von einer Stromquelle (12) als Antwort auf ein Anweisungsausgangssignal (h), das ausgegeben wird, wenn die Unterscheidungseinrichtung (39) entscheidet, das eine Löschung auftritt; und

eine Anzeigeeinrichtung (40) zum Anzeigen von Informationen in Zusammenhang mit dem Auftreten der Löschung.

4. Überwachungssystem (21), das für einen supraleitenden Transformator (1) verwendet wird, der Wicklungen von einer Primärwicklung bis zu einer Wicklung N-ter Ordnung (4, 5, 6) umfaßt, wobei N eine ganze Zahl, nicht kleiner als 3, ist, und bei dem die Wicklungen aus supraleitenden Leitungen ausgebildet und um eine Außenfläche eines einzelnen Kernes (3) gewickelt sind, wobei das System eine Löschung erkennt, die in den Wicklungen auftritt, mit:

einer Spannungsermittlungseinrichtung (25, 27) zum Ermitteln von Klemmenspannungen (V2, V3, ..., Vn) der Wicklungen von der Sekundärwicklung bis zu der Wicklung N-ter Ordnung; und zum Bestimmen für jede Klemmenspannung, ob sie verändert worden ist, und zum Erkennen, in welcher Wicklung eine Löschung aufgetreten ist, und zwar auf der Grundlage des spezifischen Musters der Ergebnisse jener Bestimmung.

5. System nach Anspruch 4, dadurch gekennzeichnet, daß die Unterscheidungseinrichtung (39) eine Primärwicklungslöschung erkennt, wenn sich alle Klemmenspannungen (V2 bis Vn) der Wicklungen von der Sekundärwicklung bis zu der Wicklung N-ter Ordnung von der Spannungsermittlungseinrichtung verändert haben, eine Sekundärwicklungslöschung erkennt, wenn sich lediglich die Klemmenspannung der Sekundärwicklungen von der Spannungsermittlungseinrichtung verändert hat, und eine Löschung der Wicklung N-ter Ordnung erkennt, wenn sich lediglich die Klemmenspannung (Vn) der Wicklungen N-ter Ordnung von der Spannungsermittlungseinrichtung verändert hat.

6. System nach Anspruch 4 oder 5, dadurch gekennzeichnet, daß es ferner enthält:

eine Spannungsermittlungseinrichtung (23) zum Ermitteln einer Klemmenspannung (V1) der Primärwicklung:

9

eine Stromermittlungseinrichtung (31, 32, 33) zum jeweiligen Ermitteln von Veränderungen der Ströme (I1, I2, ..., In), die durch die Wicklungen von der Primärwicklung bis zu der Wicklung N-ter Ordnung (4, 5, 6) fließen;

eine Magnetflußermittlungseinrichtung (37, 38), die auf dem Kern (3) angeordnet ist; und

eine Stromquellentrenneinrichtung (10) zum Trennen des supraleitenden Transformators (1) von einer Stromquelle (12) als Antwort auf ein Anweisungsausgangssignal (h), das ausgegeben wird, wenn die Unterscheidungseinrichtung (39) entscheidet, das eine Löschung auftritt.

7. System nach Anspruch 6, dadurch gekennzeichnet, daß die Unterscheidungseinrichtung (39) außerdem bestimmt, ob eine Veränderung jeder bzw. jedes, nämlich der Klemmenspannung (V1) der Primärwicklung, der Wicklungsströme (I1, ..., In) und eines Ausgangsignals (Vm) der Magnetflußermittlungseinrichtung, stattgefunden hat; und erkennt, in welcher der Wicklungen eine Löschung aufgetreten ist, und zwar auf der Grundlage des spezifischen Musters der Ergebnisse der Bestimmungen.

8. System nach Anspruch 6, dadurch gekennzeichnet, daß die Unterscheidungseinrichtung (39) ein Ausgangssignal von der Magnetflußermittlungseinrichtung (37, 38), ein Ausgangssignal von der Spannungsermittlungseinrichtung (23, 25, 27) und ein Ausgangssignal von der Stromermittlungseinrichtung (31, 32, 33) empfängt, Spannungsabfälle, die durch den Widerstand der entsprechenden Wicklungen bewirkt werden, berechnet und erkennt, in welcher der Wicklungen eine Löschung aufgetreten ist, und zwar auf der Grundlage der Werte der berechneten Spannungsabfälle.

9. System nach Anspruch 8, dadurch gekennzeichnet, daß die Unterscheidungseinrichtung (39) die Spannungsabfälle Vr1, Vr2 und Vr3 berechnet, die in der Primär- bis Tertiarwicklung unter Verwendung folgender Berechnungen erzeugt werden:

$$Vr1 = I1.R1 = V1 - Vm - jX1.I1$$
$$Vr2 = I2.R2 = Vm - V2 - jX2.I2$$
$$Vr3 = I3.R3 = Vm - V3 - jX3.I3$$

wobei Rn ein Widerstand für eine Wicklung der n-ten Ordnung, In ein Strom der Wicklung der n-ten Ordnung, Vn eine Spannung der Wicklung der n-ten Ordnung, Vm die Ausgangssignalspannung der Magnetflußermittlungseinrichtung (37, 38), die der induzierten Spannung in der betreffenden Wicklung (n=1, 2 oder 3) für die betreffende Gleichung entspricht, und jXn ein induktiver Widerstand einer Wicklung der n-ten Ordnung für n = 1 bis 3 ist und, wenn Vr1, Vr2 und Vr3, die mit den Gleichungen berechnet werden, Werte anzeigen, die außerhalb eines vorbestimmten Bereichs liegen, die Unterscheidungseinrichtung (39) entscheidet, daß in den Wicklungen eine Löschung vorliegt.

10. System nach Anspruch 6, 7, 8 oder 9, dadurch gekennzeichnet, daß die Entscheidungseinrichtung (39) umfaßt: einen RAM, der mit der Spannungsermittlungseinrichtung, der Stromermittlungseinrichtung und der Magnetflußermittlungseinrichtung verbunden ist, zum Speichern von Ausgangssignalen, die von der Spannungsermittlungseinrichtung, der Stromermittlungseinrichtung und der Magnetflußermittlungseinrichtung ausgegeben worden sind.

11. System nach Anspruch 6, 7, 8 oder 9, dadurch gekennzeichnet, daß die Entscheidungseinrichtung (39) umfaßt: ein Register, das mit der Spannungsermittlungseinrichtung, der Stromermittlungseinrichtung und der Magnetflußermittlungseinrichtung verbunden ist, zum Speichern von Ausgangssignalen, die von der Spannungsermittlungseinrichtung, der Stromermittlungseinrichtung und der Magnetflußermittlungseinrichtung als eine vorbestimmte Anzahl von binären Informationseinzelteilen (Binärziffer 1/0) ausgegeben worden sind.

12. System nach Anspruch 6, dadurch gekennzeichnet, daß die Stromquellentrenneinrichtung (10) umfaßt: mehrere Thyristoren (9a, 9b), die zwischen die Primärwicklung (4) des supraleitenden Transformators (1) und die Stromquelle (12) parallel zueinander und in entgegengesetzte Richtungen geschaltet sind, zum elektrischen Trennen der Schaltung, wenn ein Signal (h) von der Unterscheidungseinrichtung (39) ausgegeben worden ist.

13. System nach einem der Ansprüche 4 bis 12, dadurch gekennzeichnet, daß die Spannungsermittlungseinrichtung (23, 25, 27) digitale Voltmeter aufweisen, die mit den Wicklungen verbunden sind, zum Auswerten der Klemmenspannungen der Wicklungen.

**Revendications**

1. Système de surveillance (21), lequel est utilisé pour un transformateur supraconducteur (1) qui comprend un enroulement primaire (4) et un enroulement secondaire (5), et dans lequel lesdits enroulements primaire et secondaire sont constitués par des lignes supraconductrices et sont enroulés autour d'une surface externe d'un unique noyau (3), ledit système détectant une étincelle se produisant dans les enroulements, comprenant :

   un moyen de détection de tension (25) pour détecter une tension aux bornes (V2) dudit enroulement secondaire ;

   un moyen de détection de flux magnétique (37, 38), monté sur ledit noyau, pour détecter l'amplitude du flux magnétique généré dans ledit noyau pour produire une tension de sortie (Vm) représentative de son amplitude ; et

   un moyen de discrimination (39) pour déterminer si oui ou non il y a une variation de ladite tension aux bornes (V2) et de ladite tension de sortie (Vm) et pour identifier lequel des enroulements a subi une étincelle sur la base du motif spécifique des résultats de cette détermination, sur la base de la combinaison spécifique des variations de ces tensions (V2, Vm).

2. Système selon la revendication 1, caractérisé en ce que ledit moyen de discrimination (39) identifie l'enroulement primaire comme ayant subi une étincelle lorsque la tension de sortie (Vm) dudit moyen de détection de flux magnétique est modifiée et identifie une étincelle d'enroulement secondaire lorsque seule la tension aux bornes (V2) dudit moyen de détection de tension est modifiée.

3. Système selon la revendication 1, caractérisé en ce qu'il comprend en outre :

   un moyen de déconnexion de source d'alimentation (10) pour déconnecter ledit transformateur supraconducteur (1) d'une source d'alimentation (12) en réponse à une sortie de signal d'instruction (h) émise en sortie lorsque ledit moyen de discrimination (39) discrimine qu'une étincelle s'est produite ; et

   un moyen d'affichage (40) pour afficher une information associée à la survenue d'une étincelle.

4. Système de surveillance (21), lequel est utilisé pour un transformateur supraconducteur (1) qui comprend des enroulements primaires jusqu'à l'ordre N (4, 5, 6), N étant un entier non inférieur à 3, et dans lequel les enroulements sont formés par des lignes supraconductrices et sont enroulés autour d'une surface externe d'un unique noyau (3), ledit système détectant la survenue d'une étincelle dans les enroulements, comprenant :

   un moyen de détection de tension (25, 27) pour détecter des tensions aux bornes (V2, V3, ..., Vn) des enroulements secondaires jusqu'à l'ordre N et pour déterminer pour chaque tension aux bornes si oui ou non il y a eu une modification de celle-ci et pour identifier quel enroulement a subi une étincelle, sur la base du motif spécifique des résultats de cette détermination.

5. Système selon la revendication 4, caractérisé en ce que ledit moyen de discrimination (39) identifie une étincelle d'enroulement primaire lorsque toutes les tensions aux bornes (V2 à Vn) des enroulements secondaires jusqu'à l'ordre N provenant dudit moyen de détection de tension ont été modifiées, identifie une étincelle d'enroulement secondaire lorsque seulement la tension aux bornes dudit enroulement secondaire provenant dudit moyen de détection de tension a été modifiée et identifie une étincelle d'enroulement d'ordre N lorsque seulement la tension aux bornes (Vn) de l'enroulement d'ordre N provenant dudit moyen de détection a été modifiée.

6. Système selon la revendication 4 ou 5, caractérisé en ce qu'il comprend en outre :

   un moyen de détection de tension (23) pour détecter une tension aux bornes (V1) dudit enroulement primaire ;

   un moyen de détection de courant (31, 32, 33) pour détecter respectivement des variations des courants (I1, I2, ... In) circulant au travers desdits enroulements primaires jusqu'à l'ordre N (4, 5, 6) ;

   un moyen de détection de flux magnétique (37, 38) monté sur ledit noyau (3) ; et

   un moyen de déconnexion de source d'alimentation (10) pour déconnecter ledit transformateur supraconducteur (1) d'une source d'alimentation (12) en réponse à une sortie de signal d'instruction (h) émise en sortie lorsque ledit moyen de discrimination (39) discrimine qu'une étincelle s'est produite.

7. Système selon la revendication 6, caractérisé en ce que ledit moyen de discrimination (39) détermine également si oui ou non il y a eu une quelconque modification de chaque élément pris parmi la tension aux bornes (V1) de l'enroulement primaire, lesdits courants d'enroulement (I1, ..., In) et un signal de sortie (Vm) du moyen de détection de flux magnétique ; et identifie lequel desdits enroulements a subi une étincelle sur la base du motif spécifique des résultats desdites déterminations.

8. Système selon la revendication 6, caractérisé en ce que ledit moyen de discrimination (39) reçoit un signal de sortie provenant dudit moyen de détection de flux magnétique (37, 38), des signaux de sortie provenant dudit moyen de détection de tension (23, 25, 27), et des signaux de sortie provenant dudit moyen de détection de courant (31, 32, 33), calcule des chutes de tension provoquées par une valeur de résistance des enroulements correspondants et identifie lequel desdits enroulements a subi une étincelle sur la base des niveaux des chutes de tension calculées.

9. Système selon la revendication 8, caractérisé en ce que ledit moyen de discrimination (39) calcule les chutes de tension Vr1, Vr2 et Vr3 générées dans lesdits enroulements primaire à tertiaire en utilisant les calculs suivants :

$$Vr1 = I1.R1 = V1 - Vm - jX1.I1$$
$$Vr2 = I2.R2 = Vm - V2 - jX2.I2$$
$$Vr3 = I3.R3 = Vm - V3 - jX3.I3$$

où Rn : une valeur de résistance pour un enroulement d'ordre n, In : un courant d'enroulement d'ordre n, Vn : une tension d'enroulement d'ordre n, Vm : la tension de signal de sortie du moyen de détection de flux magnétique (37, 38) qui correspond à la tension induite dans l'enroulement respectif (n = 1, 2 ou 3) pour l'équation respective et jXn : une réactance d'un enroulement d'ordre n pour n = 1 à 3 et lorsque Vr1, Vr2 et Vr3 calculés au moyen des équations prennent des valeurs tombent à l'extérieur d'une plage prédéterminée, ledit moyen de discrimination (39) discrimine que les enroulements subissent une étincelle.

10. Système selon la revendication 6, 7, 8 ou 9, caractérisé en ce que ledit moyen de discrimination (39) comprend une mémoire vive (RAM) connectée audit moyen de détection de tension, audit moyen de détection de courant et audit moyen de détection de flux magnétique pour stocker des signaux de sortie émis en sortie depuis ledit moyen de détection de tension, ledit moyen de détection de courant et ledit moyen de détection de flux magnétique.

11. Système selon la revendication 6, 7, 8 ou 9, caractérisé en ce que ledit moyen de discrimination (39) comprend un registre, connecté audit moyen de détection de tension, audit moyen de détection de courant et audit moyen de détection de flux magnétique, pour stocker des signaux de sortie émis en sortie depuis ledit moyen de détection de tension, ledit moyen de détection de courant et ledit moyen de détection de flux magnétique en tant que nombre prédéterminé d'éléments d'information binaire (nombre binaire 1/0).

12. Système selon la revendication 6, caractérisé en ce que ledit moyen de déconnexion de source d'alimentation (10) comprend une pluralité de thyristors (9a, 9b) connectés entre ledit enroulement primaire (4) dudit transformateur supraconducteur (1) et une source d'alimentation (12) en parallèle l'un avec l'autre et selon des directions opposées pour, lorsqu'un signal (h) est délivré depuis ledit moyen de discrimination (39), déconnecter électriquement le circuit.

13. Système selon l'une quelconque des revendications 4 à 12, caractérisé en ce que ledit moyen de détection de tension (23, 25, 27) comprend des voltmètres numériques connectés auxdits enroulements pour détecter des tensions aux bornes desdits enroulements.

F I G. 1

# F I G. 2

F I G. 3

F I G. 4